# EUROPEAN PATENT SPECIFICATION

(11) **EP 3 480 545 B1**
(45) Date of publication and mention of the grant of the patent: **19.05.2021**
(21) Application number: 17836635.7
(22) Date of filing: 20.06.2017
(51) Int. Cl.: F28D 20/00, B60H 1/32, F25B 39/02, F28D 1/053, F28D 20/02

(54) **COLD STORAGE EVAPORATOR**
KALTSPEICHERVERDAMPFER
ÉVAPORATEUR DE STOCKAGE DE FROID

(30) Priority: 04.08.2016 JP 2016153828
(43) Date of publication of application: 08.05.2019
(73) Proprietor: Japan Climate Systems Corporation, Higashihiroshima-shi, Hiroshima 739-0153 (JP)
(72) Inventor: IWANARI Motoaki, Higashihiroshima-shi Hiroshima 739-0153 (JP); YOSHIDA Takashi, Higashihiroshima-shi Hiroshima 739-0153 (JP); YAMAGUCHI Hiroshi, Higashihiroshima-shi Hiroshima 739-0153 (JP); KITA Kazunori, Higashihiroshima-shi Hiroshima 739-0153 (JP)
(74) Representative: Delorme, Nicolas
(86) International application number: PCT/JP2017/022724
(87) International publication number: WO 2018/025528

(56) References cited:
- WO-A1-2016/098274
- JP-A- 2010 091 250
- JP-A- 2010 261 658
- JP-A- 2012 521 534
- JP-A- 2014 035 099
- JP-A- 2015 033 994
- US-A1- 2010 223 949
- US-A1- 2012 204 597
- US-A1- 2015 211 806

## Description

### TECHNICAL FIELD

The present invention relates to a cold storage evaporator having a cold storage function of storing cryogenic energy of refrigerant, and more particularly to a structure including cold storage containers containing cold storage material.

### BACKGROUND ART

Air-conditioners installed in, for example, vehicles typically include a refrigeration cycle system. In the refrigeration cycle system, refrigerant discharged from an engine-driven compressor is condensed by a condenser and then introduced via an expansion valve to an evaporator, where heat exchange occurs between the refrigerant and external air to be air-conditioned while the refrigerant is flowing in the evaporator. With this configuration, the refrigeration cycle system can achieve a desired cooling performance.

To reduce the emission of carbon dioxide or for other purposes, more and more recently manufactured vehicles are equipped with a start-stop system that has a function of automatically stopping the engine for idle reduction while, for example, the vehicle is waiting for the traffic lights to change. Vehicles having such a start-stop function stop the compressor of the refrigeration cycle system when the engine is stopped for idle reduction, which in turn stops the circulation of refrigerant. This situation leads to an insufficient cooling performance, causing the air-conditioner to request the engine to frequently restart. To solve this problem, cold storage evaporators that are evaporators having a cold storage function are used (see, for example, Patent Documents 1 and 2).

The evaporators disclosed in Patent Documents 1 and 2 include a core including a plurality of refrigerant tubes in which refrigerant flows, a plurality of fins, and a plurality of cold storage containers that are stacked in a direction crossing an airflow direction of external air. At upper and lower ends of the core, header tanks are provided that are in communication with the refrigerant tubes. The refrigerant tubes, fins, and cold storage containers are stacked such that two fins and two refrigerant tubes are alternately stacked and then a cold storage container is disposed next to the refrigerant tube, and another refrigerant tube is disposed. While the compressor is driven and the refrigerant is circulating, the cryogenic energy of the refrigerant is transmitted from side surfaces of the refrigerant tubes to side surfaces of the cold storage containers and is stored in the cold storage material in the cold storage containers. When the compressor stops, the cold stored in the cold storage material is emitted to cool the external air for a while.

Patent Document 2 describes a cold storage container having a dimension in the stacking direction smaller than the dimension of a fin in the staking direction.

### CITATION LIST

### PATENT DOCUMENT

PATENT DOCUMENT 1: Japanese Unexamined Patent Publication No. 2010-091250
PATENT DOCUMENT 2: Japanese Unexamined Patent Publication No. 2016-035382
US2015/198383 and US2015/211806 disclose a cold storage heat exchanger.
US2010223949 discloses an evaporator with cool storage function.

### SUMMARY OF THE INVENTION

### TECHNICAL PROBLEM

The core described in Patent Documents 1 and 2 has a structure capable of including a plurality of cold storage containers. Each cold storage container is disposed next to a refrigerant tube after two fins and two refrigerant tubes are alternately arranged. With this structure, at least two fins are interposed between two cold storage containers, and this causes each cold storage container, which is disposed next to a fin via a refrigerant tube, to be located only at one side of the fin, which in turn fails to achieve a desired cooling performance when the compressor is stopped.

Patent Document 2 describes cold storage containers each having a dimension in the stacking direction smaller than the dimension of a fin in the staking direction. The cold storage containers described in Patent Document 2 are each disposed next to a refrigerant tube after two fins and two refrigerant tubes are alternately stacked one by one, as described above. With this structure, each cold storage container is inevitably located only at one side of a fin via a refrigerant tube, which in turn fails to achieve a desired cooling performance when the compressor is stopped.

The present invention has been made in view of the foregoing, and it is an object of the present invention to provide a high-performance cold storage evaporator that can achieve an enhanced cooling performance when the compressor is stopped, and can achieve an enhanced cold storage capability and a reduced airflow resistance.

### SOLUTION TO THE PROBLEM

To achieve the object above, the cold storage evaporator according to the present invention is defined in claim 1 and includes fins, refrigerant tubes, and cold storage containers that are stacked in a certain order, and a dimension of each cold storage container in the staking direction is smaller than a dimension of each fin in the stacking direction.

The cold storage evaporator according to the present invention includes a core including a plurality of refrigerant tubes in which refrigerant flows, a plurality of fins through which external air passes, and a plurality of cold storage containers containing cold storage material. The refrigerant tubes, the fins, and the cold storage containers are stacked. The cold storage evaporator includes a plurality of heat exchange units each including a fin, a refrigerant tube, a cold storage container, and another one of the refrigerant tubes that are stacked in this order in a direction crossing a direction in which the external air passes. The heat exchange units are arranged in the direction crossing the direction in which the external air passes. A dimension of each cold storage container in the stacking direction is smaller than a dimension of each fin in the stacking direction.

With this configuration, the fins, refrigerant tubes, and cold storage containers included in the core are stacked in the order of a fin, a refrigerant tube, a cold storage container, a refrigerant tube, a fin, a refrigerant tube, a cold storage container, etc. This configuration prevents two or more fins from being interposed between two cold storage containers, and prevents the cold storage containers from being significantly distant from each other. In this regard, the cold storage evaporator can achieve an enhanced cooling performance when the compressor is stopped and the cryogenic energy is emitted from the cold storage material.

Since the dimension of each cold storage container in the stacking direction is smaller than the dimension of each fin in the stacking direction, this configuration substantially prevents an increase in the airflow resistance despite the installation of the cold storage containers. A smaller dimension of each cold storage container in the stacking direction allows for more refrigerant tubes in the core without increasing the dimension of the core in the stacking direction, which in turn leads to an enhanced cooling performance. A smaller dimension of each cold storage container in the stacking direction also allows for more cold storage containers in the core, which in turn leads to an enhanced cold storage capability.

According to the present invention, A/B is 0.45 or greater and 0.75 or smaller, where A represents the dimension of each cold storage container in the stacking direction, and B represents the dimension of each fin in the stacking direction.

In other words, if A/B is smaller than 0.45, the cooling performance is poor, and if A/B is more than 0.75, the cooling performance is poor. In this regard, setting A/B in the range above substantially prevents a poor cooling performance.

According to a second aspect of the present invention, A/B is 0.65 or smaller.

According to the present invention, C is 1.5 mm or greater and 2.5 mm or smaller, where C represents a dimension of each refrigerant tube in the stacking direction.

In other words, if the dimension of each refrigerant tube in the stacking direction is smaller than 1.5 mm, the cooling performance is poor, and if it is greater than 2.5 mm, the cooling performance is poor. In this regard, setting the dimension of each refrigerant tube in the stacking direction in the range above substantially prevents a poor cooling performance.

According to a third aspect of the present invention, C is 2.25 mm or smaller.

According to the present invention, B/C is 2.0 or greater and 4.5 or smaller, where B represents the dimension of each fin in the stacking direction, and C represents a dimension of each refrigerant tube in the stacking direction.

In other words, with this configuration, if B/C is smaller than 2.0, the cooling performance is poor, and if B/C is greater than 4.5, the cooling performance is poor. In this regard, setting B/C in the range above substantially prevents a poor cooling performance.

According to a fourth aspect of the present invention, B/C is 2.5 or greater and 4.0 or smaller.

According to the present invention, A is 2.5 mm or greater and 4.5 mm or smaller, where A represents the dimension of each cold storage container in the stacking direction.

In other words, if the dimension of each cold storage container in the stacking direction is smaller than 2.5 mm, the cooling performance is poor, and if it is greater than 4.5 mm, the cooling performance is poor. In this regard, setting the dimension of each cold storage container in the stacking direction in the range above substantially prevents a poor cooling performance.

According to a fifth aspect of the present invention, A is 4.0 mm or smaller.

According to the present invention, the cold storage containers have recessed portions that are recessed inward toward inside of the cold storage containers.

This structure increases a rate of cryogenic energy absorption and a rate of cold emission of the cold storage material contained in the cold storage containers. Since the dimension of each cold storage container in the stacking direction is smaller than the dimension of each fin in the stacking direction, the rate of cryogenic energy absorption and the rate of cryogenic energy emission of the cold storage material are sufficiently increased only by providing the recessed portions without providing other members inside the cold storage containers, such as inner fins.

### ADVANTAGES OF THE INVENTION

According to the invention, a plurality of heat exchange units each including a fin, a refrigerant tube, a cold storage container, and another refrigerant tube that are stacked in this order are arranged in a direction crossing the direction in which the external air passes, and the dimension of each cold storage container in the stacking direction is smaller than the dimension of each fin in the stacking direction. This configuration can achieve an enhanced cooling performance and an enhanced cold storage capability, and can reduce airflow resistance.

According to the invention, A/B is set to 0.45 or greater and 0.75 or smaller, where A represents the dimension of each cold storage container in the stacking direction and B represents the dimension of each fin in the stacking direction. This configuration can achieve a sufficiently enhanced cooling performance.

According to the second aspect, A/B is set to no more than 0.65 and this configuration can achieve a further enhanced cooling performance.

According to the invention, the dimension of each refrigerant tube is set to 1.5 mm or greater and 2.5 mm or smaller, and this configuration can achieve a sufficiently enhanced cooling performance.

According to the third aspect, the dimension of each refrigerant tube in the stacking direction is set to no more than 2.25 mm, and this configuration can achieve a further enhanced cooling performance.

According to the invention, B/C is set to 2.0 or greater and 4.5 or smaller, where B represents the dimension of each fin in the stacking direction and C represents the dimension of each refrigerant tube in the stacking direction. This configuration can achieve a sufficiently enhanced cooling performance.

According to the fourth aspect, B/C is set to 2.5 or greater and 4.0 or smaller, and this configuration can achieve a further enhanced cooling performance.

According to the invention, the dimension of each cold storage container is set to 2.5 mm or greater and 4.5 mm or smaller, and this configuration can achieve a sufficiently enhanced cooling performance.

According to the fifth aspect, the dimension of each cold storage container in the stacking direction is set to no more than 4.0 mm, and this configuration can achieve a further enhanced cooling performance.

According to the invention, the cold storage containers have recessed portions and this configuration can increase the rate of cryogenic energy absorption and the rate of cryogenic energy emission of the cold storage material without providing other members such as inner fins. This can increase cold storage capability, and can achieve an enhanced cooling performance when the compressor is stopped.

### BRIEF DESCRIPTION OF THE DRAWINGS

[FIG. 1] FIG. 1 is a diagram of a cold storage evaporator according to an embodiment of the present invention seen from downstream in an airflow direction of external air.
[FIG. 2] FIG. 2 is a sectional view taken along line II-II in FIG. 1.
[FIG. 3] FIG. 3 is a sectional view taken along line III-III in FIG. 2.
[FIG. 4] FIG. 4 is a vertically cut sectional view of an upper portion of a core.
[FIG. 5] FIG. 5 is a graph illustrating a relation between cooling performance and a ratio of a dimension of a cold storage container to a dimension of a fin in a stacking direction.
[FIG. 6] FIG. 6 is a graph illustrating a relation between cooling performance and a ratio of a dimension of a fin to a dimension of a refrigerant tube in the stacking direction.

### DESCRIPTION OF EMBODIMENT

The following describes an embodiment of the present invention with reference to the accompanying drawings. Preferred embodiments described below are presented for substantially illustrative purposes only and are not intended to limit the scope of the present invention, or its application or usage.

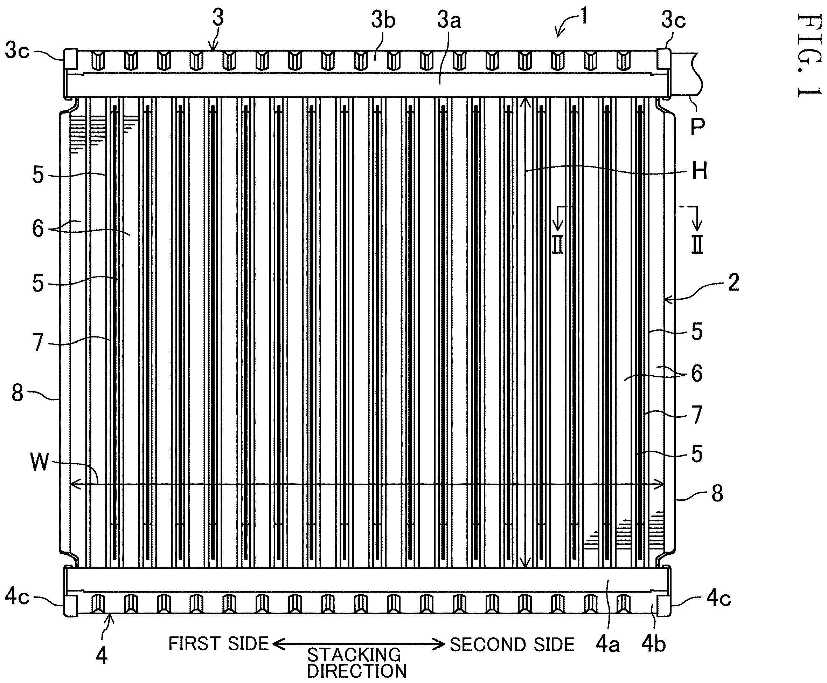

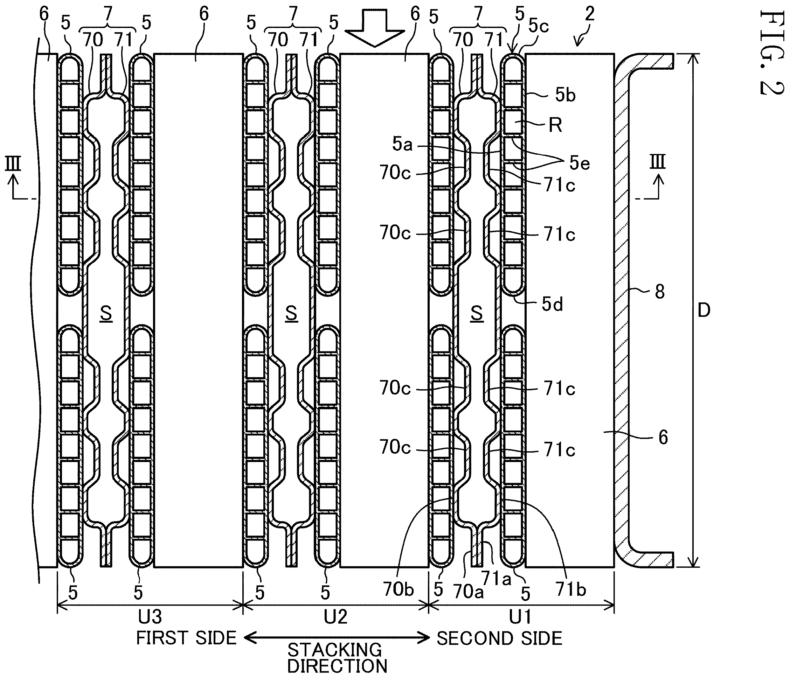

FIG. 1 is a diagram of a cold storage evaporator 1 seen from downstream in an airflow direction of external air. The white arrow in FIG. 2 indicates the airflow direction of external air. The cold storage evaporator 1 configures an evaporator of a refrigeration cycle system included in a vehicle air-conditioner (not illustrated) installed in an automobile. In addition to the cold storage evaporator 1, the refrigeration cycle system includes, for example, a compressor driven by an engine installed in a vehicle, a condenser, and an expansion valve, which are not illustrated. These components are connected by refrigerant tubes. Refrigerant discharged from the compressor flows into the condenser, where the refrigerant is condensed, and then the refrigerant is expanded by the expansion valve and flows into the cold storage evaporator 1, where heat exchange occurs between the refrigerant and the external air. The refrigerant is then discharged from the cold storage evaporator 1 and is drawn into the compressor.

The cold storage evaporator 1 is installed in a vehicle having a start-stop function for idle reduction. The start-stop function, which has been widely known, automatically stops the engine when certain engine shutdown conditions are satisfied, such as when the vehicle speed is zero and the brake pedal is stepped down. When the conditions are not satisfied, for example, when the brake pedal is not stepped down, the start-stop function does not automatically stop the engine. The conditions of the start-stop function relating to the air-conditioner take priority over the conditions relating to the vehicle (conditions relating to vehicle speed and operation on the brake pedal). If the conditions of the start-stop function relating to the vehicle are satisfied but the conditions relating to the air-conditioner are not satisfied, the start-stop function does not stop the engine. If, for example, the temperature of the air-conditioned air blown from the air-conditioner can keep the required cooling performance, the start-stop system determines that the conditions relating to the air-conditioner are satisfied, whereas, if not, the start-stop system determines that the conditions relating to the air-conditioner are not satisfied.

The cold storage evaporator 1 is housed in an air-conditioner casing, which is not illustrated. The air-conditioner casing selectively introduces one of the air outside the vehicle cabin and the air inside the vehicle cabin. The air introduced in the casing is blown to the cold storage evaporator 1 by a fan. The air-conditioner casing also houses a heat exchanger such as a heater core for heating purposes and an air-mixing damper. To achieve a desired air temperature, the air-mixing damper is used to control the amount of air that has passed through the cold storage evaporator 1 to be introduced to the heat exchanger for heating purposes. The resulting conditioned air is supplied to various parts of the vehicle cabin, such as to the inner surface of the windshield and to the upper body or legs of passengers.

The cold storage evaporator 1 includes a core 2, an upper header tank 3, and a lower header tank 4. The core 2 includes a plurality of refrigerant tubes 5 in which refrigerant flows, a plurality of fins 6 through which external air passes, and a plurality of cold storage containers 7 containing cold storage material. These components are stacked in a direction crossing the airflow direction of the external air. The core 2 serves to cool the external air. At the opposite sides of the core 2 in the stacking direction, end plates 8 are provided.

The refrigerant tubes 5 are flat tubes having an elongated cross-section in the direction in which the external air passes. The refrigerant tubes 5 extend in the vertical direction. As illustrated in FIG. 2, each refrigerant tube 5 has a first wall 5a at a first side in the stacking direction and a second wall 5b at a second side, which is opposite to the first side, in the stacking direction. The first wall 5a and the second wall 5b extend substantially parallel to each other. The refrigerant tube 5 has an upstream wall 5c located upstream in the airflow direction of the external air. The upstream wall 5c connects an upstream end of the first wall 5a and an upstream end of the second wall 5b that are located upstream in the airflow direction of the external air, and has a curved shape curving upstream. The refrigerant tube 5 has a downstream wall 5d located downstream in the airflow direction of the external air. The downstream wall 5d connects a downstream end of the first wall 5a and a downstream end of the second wall 5b that are located downstream in the airflow direction of the external air, and has a curved shape curving downstream.

Each refrigerant tube 5 has a refrigerant path R in which refrigerant flows vertically. Inside the refrigerant tube 5, a plurality of inner walls 5e are provided. The inner walls 5e are joint portions extending from an inner surface of the first wall 5a to an inner surface of the second wall 5b to connect the first wall 5a and the second wall 5b. The inner walls 5e are spaced apart in the airflow direction of the external air. The inner walls 5e divide the refrigerant path R into a plurality of sections, and connect the first wall 5a and the second wall 5b at a plurality of positions. This configuration makes the refrigerant tube 5 more pressure resistant. The inner walls 5e may be omitted.

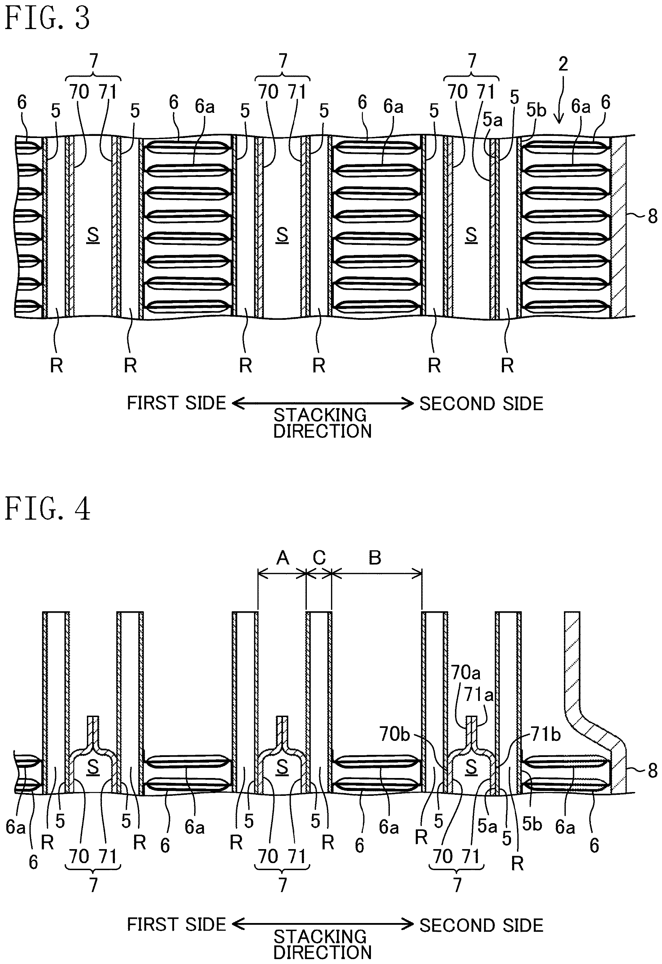

As illustrated in FIG. 4, the upper ends of the refrigerant tubes 5 project upward above the upper ends of the fins 6 and the cold storage containers 7. Although not illustrated, the lower ends of the refrigerant tubes 5 project downward below the lower ends of the fins 6 and the cold storage containers 7. This structure is for the upper and lower ends of the refrigerant tubes 5 to be inserted in the upper header tank 3 and the lower header tank 4, respectively.

As illustrated in FIG. 2, the refrigerant tubes 5 are arranged in two rows along the flow of the external air, one being located upstream and the other one being located downstream of the core 2,. The upstream refrigerant tubes 5 are located upstream relative to the center portion of the core 2 in the airflow direction of the external air, and the downstream refrigerant tubes 5 are located downstream relative to the center portion of the core 2 in the airflow direction of the external air. The upstream refrigerant tubes 5 and the downstream refrigerant tubes 5 are spaced apart with a predetermined clearance therebetween. In the present embodiment, the upstream and the downstream refrigerant tubes 5 have the same configurations, but the upstream and the downstream refrigerant tubes 5 may have different shapes or structures.

The refrigerant tubes 5 are made of, but are not limited to, for example an aluminum alloy. The refrigerant tubes 5 may be made of other materials having good thermal conductivity. The refrigerant tubes 5 are formed by, but are not limited to, for example extrusion. The refrigerant tubes 5 may be formed by rolling from a plate material.

As illustrated in FIGS. 3 and 4, the fins 6 extend vertically along the refrigerant tubes 5, and are corrugated fins having a vertically continuous wave-like shape when seen in the airflow direction of the external air. As illustrated in FIG. 2, the fins 6 are continuous from upstream to downstream of the core 2 in the airflow direction of the external air and each fin 6 is interposed between two adjacent refrigerant tubes 5 in the stacking direction. The fins 6 have louvers 6a (only illustrated in FIGS. 3 and 4) that are formed by cutting and slanting portions of a plate material of which the fins 6 are made. The fins 6 can be formed by corrugating, for example, a thin plate aluminum alloy. The fins 6 can be bonded to the outer surfaces of the refrigerant tubes 5 by brazing.

The cold storage containers 7 generally extend in the vertical direction and each are formed by, as illustrated in FIG. 2, combining a first plate 70 defining a first side of the cold storage container 7 in the stacking direction and a second plate 71 defining a second side, opposite to the first side, of the cold storage container 7 in the stacking direction. The horizontal cross-section of each cold storage container 7 has an elongated shape in the airflow direction of the external air. The cold storage containers 7 are continuous from upstream to downstream of the core 2 in the airflow direction of the external air in the same manner as the fins 6. Each cold storage container 7 is interposed between two adjacent refrigerant tubes 5 in the stacking direction.

The first plate 70 and the second plate 71 define therebetween a cold storage material space S for containing cold storage material. The cold storage material in the cold storage material space S can be, for example, a fluid cold storage material. Since known cold storage material is used, the detailed description thereof is omitted.

The first plate 70 and the second plate 71 are made of, for example, an aluminum alloy plate and formed by molding. The first plate 70 has a first joint plate portion 70a extending in the vertical direction and surrounding the entire periphery of the first plate 70. The second plate 71 has a second joint plate portion 71a extending in the vertical direction and surrounding the entire periphery of the second plate 71. The second joint plate portion 71a is joined to the first joint plate portion 70a. The first joint plate portion 70a and the second joint plate portion 71a can be joined by, for example, brazing.

The inner portion of the first plate 70 inside the first joint plate portion 70a is a first bulging portion 70b bulging toward the first side in the stacking direction. The endmost surface of the first bulging portion 70b in the bulging direction is bonded to the outer surface of the refrigerant tube 5 by brazing. The inner portion of the second plate 71 inside the second joint plate portion 71a is a second bulging portion 71b bulging toward the second side in the stacking direction. The endmost surface of the second bulging portion 71b in the bulging direction is bonded to the outer surface of the refrigerant tube 5 by brazing.

The cold storage material space S is formed between the inner surfaces of the first bulging portion 70b and the second bulging portion 71b. The first bulging portion 70b has a plurality of first recessed portions 70c that are recessed inward toward the inside of the cold storage container 7, that is, toward the second side in the stacking direction. The first recessed portions 70c are spaced apart both in the airflow direction of the external air and in the vertical direction. The second bulging portion 71b has a plurality of second recessed portions 71c that are recessed inward toward the inside of the cold storage container 7, that is, toward the first side in the stacking direction. The second recessed portions 71c are spaced apart both in the airflow direction of the external air and in the vertical direction.

In this embodiment, the first recessed portions 70c are formed to face the corresponding second recessed portions 71c. In this regard, as can be seen from the horizontal cross-section of the cold storage containers 7, the dimensions between the first recessed portions 70c and the second recessed portions 71c in the stacking direction are small. The first recessed portions 70c and the second recessed portions 71c may be dimple-like indentations or may be grooves extending in the vertical direction or in the airflow direction of the external air, or may be a combination of the dimple-like indentations and grooves.

As illustrated in FIG. 2, the core 2 includes a plurality of heat exchange units U1, U2, U3 ..., and these heat exchange units U1, U2, U3 ... are arranged in a direction crossing the direction in which the external air passes and are bonded by brazing to be integrated with each other. All the heat exchange units U1, U2, U3 ... are the same units and thus the configuration of the heat exchange unit U1 is described below.

The heat exchange unit U1 includes four refrigerant tubes 5, one fin 6, and one cold storage container 7. In other words, the fin 6 is disposed at the second side of the heat exchange unit U1 in the stacking direction. At the first side of the fin 6 in the stacking direction, two refrigerant tubes 5 are aligned in the airflow direction of the external air. The second walls 5b of the two refrigerant tubes 5 are bonded to the fin 6. At the first side of the refrigerant tubes 5 in the stacking direction, the cold storage container 7 is disposed. The endmost surface of the second bulging portion 71b of the cold storage container 7 in the bulging direction is bonded to the first walls 5a of the refrigerant tubes 5. At the first side of the cold storage container 7 in the stacking direction, two refrigerant tubes 5 are aligned in the airflow direction of the external air. The second walls 5b of the two refrigerant tubes 5 are bonded to the endmost surface of the first bulging portion 70b of the cold storage container 7 in the bulging direction. In other words, the heat exchange unit U1 includes a fin 6, refrigerant tubes 5, a cold storage container 7, and refrigerant tubes 5 that are stacked in this order in the direction crossing the direction in which the external air passes.

In the present embodiment, two rows of refrigerant tubes 5 are arranged in the airflow direction of the external air, but one row of refrigerant tubes 5 or three or more rows of refrigerant tubes 5 may be arranged in the airflow direction of the external air.

The upper header tank 3 illustrated in FIG. 1 includes a header plate 3a defining the lower portion of the upper header tank 3, a tank plate 3b defining the upper portion of the upper header tank 3, and cap members 3c disposed at the opposite sides of the upper header tank 3. The header plate 3a has insertion slots (not illustrated) in which the upper ends of the refrigerant tubes 5 are inserted. The inserted upper ends of the refrigerant tubes 5 are in communication with the inner space of the upper header tank 3. The header plate 3a and the tank plate 3b constitute a housing having an elongated shape in the stacking direction and the cap members 3c close the opposite ends of the housing. To the cap member 3c at the second side in the stacking direction, refrigerant supply and drain pipes P are attached that are in communication with the upper header tank 3. Through the refrigerant supply and drain pipes P, refrigerant is supplied to and drained from the upper header tank 3. The pipe P illustrated in FIG. 1 is the refrigerant supply pipe P and the refrigerant drain pipe P is disposed behind the refrigerant supply pipe P.

The lower header tank 4 has a header plate 4a, a tank plate 4b, and cap members 4c. The header plate 4a has insertion slots (not illustrated) in which the lower ends of the refrigerant tubes 5 are inserted. The inserted lower ends of the refrigerant tubes 5 are in communication with the inner space of the lower header tank 4.

The refrigerant tubes 5 can be divided into a plurality of paths in accordance with the inner structures of the upper header tank 3 and the lower header tank 4. Such inner structures may include, for example, partitions and apertures for dividing the refrigerant tubes 5 into a plurality of paths. Such inner structures are known to those skilled in the art, and thus detailed explanations thereof will not be described herein. In the present embodiment, the upper header tank 3 has a structure to introduce refrigerant to its upstream side in the airflow direction of the external air. The introduced refrigerant flows downward to the lower header tank 4 through the upstream refrigerant tubes 5 located upstream in the airflow direction of the external air and then flows upward to the upper header tank 3 through the downstream refrigerant tubes 5 located downstream in the airflow direction of the external air, and then the refrigerant is drained to the outside. The flow pattern of the refrigerant is not limited to this.

Described next are dimensions of the fins 6, the refrigerant tubes 5, and the cold storage containers 7. As illustrated in FIG. 4, the dimension of each cold storage container 7 in the staking direction is represented by the sign "A." The dimension "A" represents a distance between outer surfaces of the cold storage container 7 at the first side and the second side in the stacking direction. The dimension of each fin 6 in the stacking direction is represented by the sign "B." The dimension "B" represents a distance between surfaces of the fin 6 at the first side and the second side in the stacking direction. The dimension of each refrigerant tube 5 in the stacking direction is represented by the sign "C." The dimension "C" represents a distance between outer surfaces of the refrigerant tube 5 at the first side and the second side in the stacking direction.

The dimension A is smaller than the dimension B. Specifically, A/B is 0.45 or greater and 0.75 or smaller, more preferably 0.45 or greater and 0.65 or smaller. The dimension B is larger than the dimension C. Specifically, B/C is 2.0 or greater and 4.5 or smaller, more preferably 2.5 or greater and 4.0 or smaller. The dimension C is smaller than the dimension A.

The dimension C is preferably 1.5 mm or greater and 2.5 mm or smaller, more preferably 2.25 mm or smaller. The dimension A is preferably 2.5 mm or greater and 4.5 mm or smaller, more preferably 4.0 mm or smaller.

Described next is the cooling operation of the cold storage evaporator 1 having the configuration above for cooling the external air. When the engine is operating, the compressor of the refrigeration cycle system is driven by the engine and refrigerant flows in the cold storage evaporator 1 through the refrigerant tubes 5. While the refrigerant is flowing in the refrigerant tubes 5, heat exchange occurs between the refrigerant and the external air mainly via the fins 6 to cool the external air. At the same time, the cryogenic energy of the refrigerant is transmitted to and stored in the cold storage material in the cold storage containers 7. The cold storage containers 7, which have the first recessed portions 70c and the second recessed portions 71c, have a sufficiently large heat-transfer area to transmit cryogenic energy of the refrigerant to the cold storage material. This configuration efficiently transmits cold of the refrigerant to the cold storage material.

When the idling of the engine is stopped, the compressor is also stopped, which in turn causes no refrigerant to flow into the cold storage evaporator 1. If cooling operation is required in this situation, the external air is blown to the cold storage evaporator 1 and is cooled by the cryogenic energy stored in the cold storage material.

The fins 6, the refrigerant tubes 5, and the cold storage containers 7 included in the core 2 are stacked in the order of a fin 6, a refrigerant tube 5, a cold storage container 7, a refrigerant tube 5, a fin 6, a refrigerant tube 5, a cold storage container 7 ..., and this arrangement prevents two or more fins 6 from being interposed between two adjacent cold storage containers 7 and prevents the two cold storage containers 7 from being significantly distant from each other. In this regard, the cold storage evaporator 1 can achieve an enhanced cooling performance when the compressor is stopped and the cryogenic energy is emitted from the cold storage material.

Since the dimension of each cold storage container 7 in the stacking direction is smaller than the dimension of each fin 6 in the stacking direction, this configuration substantially prevents an increase in the airflow resistance despite the installation of the cold storage containers 7. A smaller dimension of each cold storage container 7 in the stacking direction allows for more refrigerant tubes 5 in the core 2 without increasing the dimension of the core 2 in the stacking direction, which in turn leads to an enhanced cooling performance. A smaller dimension of each cold storage container 7 in the stacking direction also allows for more cold storage containers 7 in the core 2, which in turn leads to an enhanced cold storage capability.

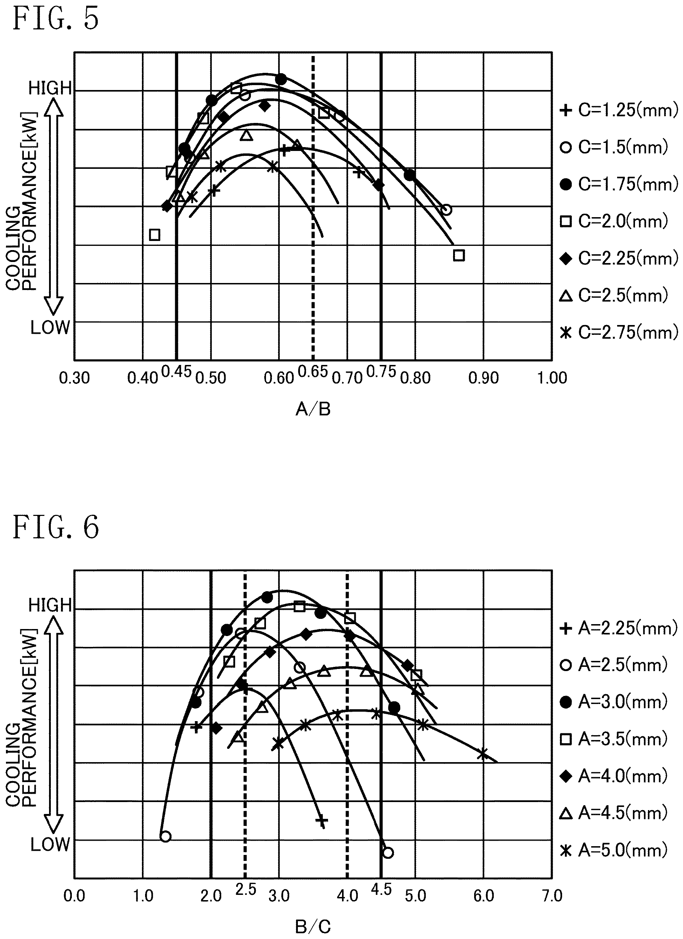

Described next is cooling performance of the cold storage evaporator 1 with reference to FIGS. 5 and 6. FIG. 5 illustrates a relation between the ratio of A to B (A/B) and the cooling performance. The horizontal axis represents the values of A/B and the vertical axis represents cooling performance. FIG. 6 illustrates a relation between the ratio of B to C (B/C) and the cooling performance. The horizontal axis represents the values of B/C and the vertical axis represents cooling performance.

The cooling performance illustrated in FIGS. 5 and 6 are results of a simulation performed by computer software. The model used in the simulation was the cold storage evaporator 1 according to the embodiment above having the structure illustrated in FIG. 1. The dimensions of the core 2 were an effective height H of 180 mm, an effective width W of 232 mm, and an effective thickness D (see FIG. 2) of 35 mm. The effective height H is a distance from the bottom surface of the upper header tank 3 to the upper surface of the lower header tank 4. The effective width W is a distance between the left and right end plates 8. The effective thickness D is a dimension of the core 2 in the airflow direction of the external air. The rate of airflow in the simulation was 450 m³/h. Similar simulation results can be obtained even when the effective height H, the effective width W, the effective thickness D, and the rate of airflow are changed to such values that are applicable to a typical automobile air-conditioner.

FIG. 5 illustrates results of simulated cold storage evaporators 1 having the respective dimension C of the refrigerant tubes 5 of 1.25 mm, 1.5 mm, 1.75 mm, 2.0 mm, 2.25 mm, 2.5 mm, and 2.75 mm in the stacking direction with respect to varying parameters of A/B The pitch of the fins 6 (distance between ridges of the fin 6) was adjusted to obtain a constant airflow resistance of the core 2.

The simulation results illustrated in FIG. 5 indicate a poor cooling performance when A/B is smaller than 0.45 and indicate a poor cooling performance when A/B is greater than 0.75. In this regard, setting A/B in the range above substantially prevents a poor cooling performance. When A/B is 0.65 or smaller, the cooling performance is further enhanced. When C is 1.5 mm or greater and 2.5 mm or smaller, the cooling performance is enhanced, and when C is 2.25 mm or smaller, the cooling performance is further enhanced.

FIG. 6 illustrates results of simulated cold storage evaporators 1 having the respective dimension A of the cold storage containers 7 of 2.25 mm, 2.5 mm, 3.0 mm, 3.5 mm, 4.0 mm, 4.5 mm, and 5.0 mm in the stacking direction with respect to varying parameters of B/C. The pitch of the fins 6 (distance between ridges of the fin 6) was adjusted to obtain a constant airflow resistance of the core 2.

The simulation results illustrated in FIG. 6 indicate a poor cooling performance when B/C is smaller than 2.0, and indicate a poor cooling performance when B/C is greater than 4.5. In this regard, setting B/C in the range above substantially prevents a poor cooling performance. When B/C is 2.5 or greater and 4.0 or smaller, the cooling performance is further enhanced. When A is 2.5 mm or greater and 4.5 mm or smaller, the cooling performance is enhanced, and when A is 4.0 mm or smaller, the cooling performance is further enhanced.

The embodiment above is presented for illustrative purposes only in any aspects and should not be considered as limiting. Furthermore, all the changes and modifications that come within the range of equivalence of the claims are to be embraced within their scope.

### INDUSTRIAL APPLICABILITY

As described above, the cold storage evaporator according to the present invention can be included in a vehicle air-conditioner having, for example, a start-stop function for idle reduction.

### DESCRIPTION OF REFERENCE CHARACTERS

- 1: Cold storage evaporator
- 2: Core
- 5: Refrigerant tube
- 6: Fin
- 7: Cold storage container
- 70c, 71c: Recessed portion
- U1, U2, U3: Heat exchange unit

## Claims

1. A cold storage evaporator (1) including a core (2) including a plurality of refrigerant tubes (5) in which refrigerant flows, a plurality of fins (6) through which external air passes, and a plurality of cold storage containers (7) containing cold storage material, the refrigerant tubes (5), the fins (6), and the cold storage containers (7) being stacked, the cold storage evaporator (1) comprising:
a plurality of heat exchange units (U1, U2, U3, ...), each heat exchange unit (U1, U2, U3, ...) including one of the fins (6), one of the refrigerant tubes (5), one of the cold storage containers (7), and another one of the refrigerant tubes (5) that are stacked in order in a direction crossing a direction in which the external air passes, herein after called the stacking direction wherein
the heat exchange units (U1, U2, U3, ...) are arranged in the stacking direction,
the cold storage container includes a first plate (70) defining a first side of the cold storage container (7) in the stacking direction and a second plate (71) defining a second side, opposite to the first side, of the cold storage container in the stacking direction,
the first plate (70) and the second plate (71) define therebetween a cold storage material space for containing cold storage material,
the first plate (70) has a first joint plate portion (70a) surrounding an entire periphery of the first plate (70),
the second plate (71) has a second joint plate portion (70b) surrounding an entire periphery of the second (71) plate and joined to the first joint plate portion,
the first plate (70) has an inner portion that is inside the first joint plate portion and that is a first bulging portion bulging (70b) toward the first side,
the first bulging portion (70b) has a plurality of first recessed portions that are recessed inward toward the inside of the cold storage container, that is in the stacking direction,
the second plate (71) has an inner portion that is inside the second joint plate portion is a second bulging portion (71b) bulging toward the second side,
the second bulging portion (71b) has a plurality of second recessed portions that are recessed inward toward the inside of the cold storage container, that is in the stacking direction,
a dimension of each cold storage container (7) in the stacking direction is smaller than a dimension of each fin (6) in the stacking direction,
an endmost surface of the first bulging portion and an endmost surface of the second bulging portion in the cold storage container are bonded to the refrigerant tubes to allow outer surfaces of the refrigerant tubes to close the first recessed portion and the second recessed portion,
**characterized in that** A/B is 0.45 or greater and 0.75 or smaller, and A is 2.5 mm or greater and 4.5 mm or smaller, where A represents the dimension of each cold storage container (7) in the stacking direction, and B represents the dimension of each fin (6) in the stacking direction,
wherein C is 1.5 mm or greater and 2.5 mm or smaller, and B/C is 2.0 or greater and 4.5 or smaller, where C represents a dimension of each refrigerant tube (5) in the stacking direction

2. The cold storage evaporator of claim 1, wherein A/B is 0.65 or smaller.

3. The cold storage evaporator of claim 1, wherein C is 2.25 mm or smaller.

4. The cold storage evaporator of claim 1, wherein B/C is 2.5 or greater and 4.0 or smaller.

5. The cold storage evaporator of claim 1, wherein A is 4.0 mm or smaller.

## Patentansprüche

1. Kaltspeicherverdampfer (1), umfassend einen Kern (2), umfassend eine Vielzahl von Kältemittelrohren (5), in denen Kältemittel fließt, eine Vielzahl von Lamellen (6), durch die Außenluft durchläuft, und eine Vielzahl von Kaltspeicherbehältern (7), die Kaltspeichermaterial enthalten, wobei die Kältemittelrohre (5), die Lamellen (6) und die Kaltspeicherbehälter (7) gestapelt sind, wobei der Kaltspeicherverdampfer (1) umfasst:
eine Vielzahl von Wärmetauschereinheiten (U1, U2, U3, ...), wobei jede Wärmetauschereinheit (U1, U2, U3, ...) eine der Lamellen (6), eines der Kältemittelrohre (5), einen der Kaltspeicherbehälter (7) und ein anderes der Kältemittelrohre (5) umfasst, die der Reihe nach in einer Richtung gestapelt sind, die eine Richtung kreuzt, in der die Außenluft durchläuft, nachstehend die Stapelrichtung genannt, wobei
die Wärmetauschereinheiten (U1, U2, U3, ...) in der Stapelrichtung angeordnet sind,
der Kaltspeicherbehälter eine erste Platte (70), die eine erste Seite des Kaltspeicherbehälters (7) in der Stapelrichtung definiert, und eine zweite Platte (71) umfasst, die eine zweite Seite, gegenüber der ersten Seite, des Kaltspeicherbehälters in der Stapelrichtung definiert,
die erste Platte (70) und die zweite Platte (71) dazwischen einen Kaltspeichermaterialraum zum Enthalten von Kaltspeichermaterial definieren,
die erste Platte (70) einen ersten verbundenen Plattenabschnitt (70a) aufweist, der eine gesamte Peripherie der ersten Platte (70) umgibt,
die zweite Platte (71) einen zweiten verbundenen Plattenabschnitt (70b) aufweist, der eine gesamte Peripherie der zweiten (71) Platte umgibt und mit dem ersten verbundenen Plattenabschnitt verbunden ist,
die erste Platte (70) einen inneren Abschnitt aufweist, der innerhalb des ersten verbundenen Plattenabschnitts liegt und der ein erster gebauchter Abschnitt ist, der zu der ersten Seite hin gebaucht (70b) ist,
der erste gebauchte Abschnitt (70b) eine Vielzahl von ersten ausgesparten Abschnitten aufweist, die nach innen zu der Innenseite des Kaltspeicherbehälters hin ausgespart sind, das in der Stapelrichtung ist,
die zweite Platte (71) einen inneren Abschnitt aufweist, der innerhalb des zweiten verbundenen Plattenabschnitts liegt und der ein zweiter gebauchter Abschnitt (71b) ist, der zu der zweiten Seite hin gebaucht ist,
der zweite gebauchte Abschnitt (71b) eine Vielzahl von zweiten ausgesparten Abschnitten aufweist, die nach innen zu der Innenseite des Kaltspeicherbehälters hin ausgespart sind, das in der Stapelrichtung ist,
eine Abmessung jedes Kaltspeicherbehälters (7) in der Stapelrichtung kleiner ist als eine Abmessung jeder Lamelle (6) in der Stapelrichtung,
eine letzte Oberfläche des ersten gebauchten Abschnitts und eine letzte Oberfläche des zweiten gebauchten Abschnitts in dem Kaltspeicherbehälter an die Kältemittelrohre gebunden sind, um äußeren Oberflächen der Kältemittelrohre zu ermöglichen, den ersten ausgesparten Abschnitt und den zweiten ausgesparten Abschnitt zu schließen,
**dadurch gekennzeichnet, dass** A/B 0,45 oder größer und 0,75 oder kleiner ist, und A 2,5 mm oder größer und 4,5 mm oder kleiner ist, wobei A die Abmessung jedes Kaltspeicherbehälters (7) in der Stapelrichtung darstellt, und B die Abmessung jeder Lamelle (6) in der Stapelrichtung darstellt,
wobei C 1,5 mm oder größer und 2,5 mm oder kleiner ist, und B/C 2,0 oder größer und 4,5 oder kleiner ist, wobei C eine Abmessung jedes Kältemittelrohrs (5) in der Stapelrichtung darstellt.

2. Kaltspeicherverdampfer nach Anspruch 1, wobei A/B 0,65 oder kleiner ist.

3. Kaltspeicherverdampfer nach Anspruch 1, wobei C 2,25 mm oder kleiner ist.

4. Kaltspeicherverdampfer nach Anspruch 1, wobei B/C 2,5 oder größer und 4,0 oder kleiner ist.

5. Kaltspeicherverdampfer nach Anspruch 1, wobei A 4,0 mm oder kleiner ist.

## Revendications

1. Évaporateur de stockage de froid (1) comportant un noyau (2) comportant une pluralité de tubes frigorifiques (5) dans lesquels s'écoule un fluide frigorifique, une pluralité d'ailettes (6) à travers lesquelles passe l'air extérieur, et une pluralité de récipients de stockage de froid (7) contenant un matériau de stockage de froid, les tubes frigorifiques (5), les ailettes (6), et les récipients de stockage de froid (7) étant empilés, l'évaporateur de stockage de froid (1) comprenant :
une pluralité d'unités d'échange de chaleur (U1, U2, U3, ...), chaque unité d'échange de chaleur (U1, U2, U3, ...) comportant l'une des ailettes (6), l'un des tubes frigorifiques (5), l'un des récipients de stockage de froid (7), et un autre des tubes frigorifiques (5) qui sont empilés dans l'ordre dans une direction traversant une direction selon laquelle passe l'air extérieur, ci-après également appelée la direction d'empilement où
les unités d'échange de chaleur (U1, U2, U3, ...) sont agencées dans la direction d'empilement,
le récipient de stockage de froid comporte une première plaque (70) définissant un premier côté du récipient de stockage de froid (7) dans la direction d'empilement et une deuxième plaque (71) définissant un deuxième côté, opposé au premier côté, du récipient de stockage de froid dans la direction d'empilement,
la première plaque (70) et la deuxième plaque (71) définissent entre elles un espace de matériau de stockage de froid pour contenir un matériau de stockage de froid,
la première plaque (70) a une première partie de plaque de jonction (70a) entourant la totalité de la périphérie de la première plaque (70),
la deuxième plaque (71) a une deuxième partie de plaque de jonction (70b) entourant la totalité de la périphérie de la deuxième plaque (71) et jointe à la première partie de plaque de jonction,
la première plaque (70) a une partie interne qui est à l'intérieur de la première partie de plaque de jonction et qui est une première partie bombée (70b) qui est bombée vers le premier côté,
la première partie bombée (70b) a une pluralité de premières parties en retrait qui sont en retrait vers l'intérieur en direction de la partie interne du récipient de stockage de froid, c'est-à-dire dans la direction d'empilement,
la deuxième plaque (71) a une partie intérieure qui est à l'intérieur de la deuxième partie de plaque de jonction et qui est une deuxième partie bombée (71b) qui est bombée vers le deuxième côté,
la deuxième partie bombée (71b) a une pluralité de deuxièmes parties en retrait qui sont en retrait vers l'intérieur en direction de la partie interne du récipient de stockage de froid, c'est-à-dire dans la direction d'empilement,
une dimension de chaque récipient de stockage de froid (7) dans la direction d'empilement est inférieure à une dimension de chaque ailette (6) dans la direction d'empilement,
une surface en fin d'extrémité de la première partie bombée et une surface en fin d'extrémité de la deuxième partie bombée dans le récipient de stockage de froid sont liées aux tubes frigorifiques pour permettre aux surfaces externes des tubes frigorifiques de fermer la première partie en retrait et la deuxième partie en retrait,
**caractérisé en ce que** A/B est supérieur ou égal à 0,45 et inférieur ou égal à 0,75, et A est supérieure ou égale à 2,5 mm et inférieure ou égale à 4,5 mm, où A représente la dimension de chaque récipient de stockage de froid (7) dans la direction d'empilement, et B représente la dimension de chaque ailette (6) dans la direction d'empilement,
où C est supérieure ou égale à 1,5 mm et inférieure ou égale à 2,5 mm, et B/C est supérieur ou égal à 2,0 et inférieur ou égal à 4,5, où C représente une dimension de chaque tube frigorifique (5) dans la direction d'empilement.

2. Évaporateur de stockage de froid de la revendication 1, dans lequel A/B est inférieur ou égal à 0,65.

3. Évaporateur de stockage de froid de la revendication 1, dans lequel C est inférieure ou égale à 2,25 mm.

4. Évaporateur de stockage de froid de la revendication 1, dans lequel B/C est supérieur ou égal à 2,5 et inférieur ou égal à 4,0.

5. Évaporateur de stockage de froid de la revendication 1, dans lequel A est inférieure ou égale à 4,0 mm.
